# EUROPÄISCHE PATENTANMELDUNG

(11) **EP 1 138 361 A2**
(43) Veröffentlichungstag der Anmeldung: **04.10.2001**
(21) Anmeldenummer: 01104339.5
(22) Anmeldetag: 23.02.2001
(51) Int. Cl.: B01D 1/18, F26B 3/12, B09C 1/06

(54) **Vorrichtung zur Behandlung von Suspensionen**

(30) Priorität: 28.03.2000 DE 10015130
(71) Anmelder: GKSS-FORSCHUNGSZENTRUM GEESTHACHT GMBH, 21502 Geesthacht (DE)
(72) Erfinder: Höhne, Joachim, 21029 Hamburg (DE); Luther, Günter, 21502 Geesthacht (DE); Wietstock, Peter, 21502 Geesthacht (DE)
(74) Vertreter: Niedmers, Ole, Dipl.-Phys.

(57) **Zusammenfassung**

Es wird eine Vorrichtung (10) zur Behandlung von Suspensionen (11), insbesondere zum Einsatz bei einem Verfahren zur Dekontaminierung von Schluff, Wasser und Schadstoffe, insbesondere Quecksilber und/oder Kohlenwasserstoffe enthaltenen Suspensionen (11) vorgeschlagen. Zur Zerstäubung der Suspension (11) ist ein erstes rohrförmiges Element (12), durch das die Suspension (11) zum offenen Austrittsende (13) des ersten Elements (12) förderbar ist, vorgesehen, sowie ein zweites rohrförmiges Element (15), das das erste rohrförmige Element (12) im wesentlichen teilweise rohrförmig umgibt, wobei in das zweite Element (15) ein gas- und/oder dampfförmiges Wärmemittel (18) einbringbar ist, das zum offenen Austrittsende (16) des zweiten Elements (15) förderbar ist, und wobei beide Austrittsenden (13, 16) in einen Zerstäubungsraum (19) münden.

## Beschreibung

Die Erfindung betrifft eine Vorrichtung zur Behandlung von Suspensionen, insbesondere zum Einsatz bei einem Verfahren zur Dekontaminierung von Schluff, Wasser und Schadstoffe, insbesondere Quecksilber und/oder Kohlenwasserstoffe enthaltenen Suspensionen.

Aus der DE-PS 195 29 998 ist ein Verfahren zur Dekontaminierung von Schluff, Schadstoffe und Wasser enthaltenen Suspension bekannt, bei dem die Suspension unter Überdruck auf die Siedetemperatur des Wasser erwärmt wird und nachfolgend fördermaßnahmenfrei einem Rohrreaktor zugeführt wird, in dem sich ein 3-Phasen-Gemisch aus Dampf, Restwasser und Feststoff entwickeln kann, und in dem das Gemisch am Einlaß mit überhitztem Dampf beaufschlagt, dann gedrosselt und anschließend mittels weiterer Energiezufuhr überhitzt wird. Anschließend erfolgt eine Trennung der gereinigten, trockenen Feststoffe von der Dampfphase.

Die in der DE-PS 195 29 998 beschriebene Anordnung zur Ausführung des dort beschriebenen Verfahrens erfüllt die in sie gesetzten Erwartungen in vollem Umfange. Bei der bekannten Vorrichtung wird ein zu dekontaminierendes Gemisch, das beispielsweise ein mit Quecksilber kontaminiertes Erdreich sein kann, einem Rührkessel zugeführt wird, wo es in Suspension gehalten und bei einem Druck von 20 bis 30 bar durch Direktdampfzugabe auf eine Temperatur von bis ca. 100° C erwärmt wird. Dabei fließt die Suspension aufgrund ihrer Behandlung im Rührkessel mit teilweise nicht newton'schem Fließverhalten einem Rohrreaktor zu. Der Rohrreaktor besteht bei der bekannten Vorrichtung aus vier Teilen, nämlich einem Injektor, einer nachgeschalteten Drossel und einer Überhitzerstrecke und schließlich einem dieser nachgeschalteten Dampfinjektor. Der Injektor wird mit überhitztem Dampf betrieben, wobei die Zufuhr überhitzten Dampfes zur weiteren Aufheizung der Suspension bis auf annähernd Siedepunkttemperatur dient. Nachfolgend gelangt die Suspension in eine Drossel und dieser nachfolgend in eine Überhitzerstrecke und schließlich dieser nachfolgend zum Dampfinjektor.

Es hat sich gezeigt, daß bei In- und Außerbetriebnahme der bekannten Vorrichtung zur Ausführung des bekannten Verfahrens im Rohrreaktor Störungen des Betriebes nicht vollständig ausgeschlossen werden können, die im wesentlichen ihre Ursache in der Verstopfung des Rohrreaktors haben. Die Verstopfungen müssen durch teilweise Zerlegung des bekannten Rohrreaktors, um diesen reinigen zu können, beseitigt werden. Dadurch wird ein angestrebter kontinuierlicher Betrieb der Vorrichtung eingeschränkt, was aufgrund der Demontagearbeiten, der Reinigungsarbeiten, der Wiedermontagearbeiten und der Wiederaufnahme des Betriebes zu erheblichen Kosten führt, wobei die Betriebsunterbrechung und die Reinigungsmaßnahmen dem angestrebten kontinuierlichen Betrieb entgegenstehen.

Es ist somit Aufgabe der vorliegenden Erfindung, eine Vorrichtung zu schaffen, mit der eine störungsfreie Spontanverdampfung der zugeführten Suspension möglich ist und eine Verstopfung der Vorrichtung verhindert wird, so daß ein geregelter, störungsfreier Übergang vom hydraulischen Transport der Suspension zum pneumatischen Transport möglich ist, wobei die bekannte Vorrichtung geeignet sein soll, unter anderem auch in eine Verfahrensstrecke, wie sie in der DE-PS 195 29 998 beschrieben ist, integriert zu werden und den dortigen Rohrreaktor wenigstens teilweise ersetzen können soll, wobei die Vorrichtung einfach aufgebaut sein soll und kostengünstig realisierbar sein soll.

Gelöst wird die Aufgabe gemäß der Erfindung dadurch, daß zur Zerstäubung der Suspension ein erstes rohrförmiges Element, durch das die Suspension, vorzugsweise unter Druck, zum offenen Austrittsende des ersten Elements förderbar ist, vorgesehen ist, sowie ein zweites rohrförmiges Element, das das erste rohrförmige Element im wesentlichen teilweise rohrförmig umgibt, wobei in das zweite Element ein gas- und/oder dampfförmiges Wärmemittel einbringbar ist, das zum offenen Austrittsende des zweiten Elements förderbar ist, und wobei beide Austrittsenden in einen Zerstäubungsraum münden.

Der Vorteil der erfindungsgemäßen Lösung besteht im wesentlichen darin, daß damit ein Sprühstrahl bzw. Sprühnebel aus Suspension erreicht wird, der einen hohen Wärme- und Stoffaustausch ermöglicht und verhindert, daß Flüssigkeitstropfen an heiße Wandoberflächen des Sprüh-bzw. Zerstäubungsraumes gelangen und dort unerwünschte Agglomerate bilden. Verstopfungen im Strömungsquerschnitt werden so vorgebeugt. Eingehende vielfältige Untersuchungen haben ergeben, daß mittels der erfindungsgemäßen Vorrichtung das aus der DE-PS 195 29 998 bekannte Verfahren, wie angestrebt, kontinuierlich betrieben werden kann, ohne daß in der erfindungsgemäßen Vorrichtung Verstopfungen beobachtet wurden. Die erfindungsgemäß mögliche geringe Aufenthaltszeit der Suspension in der Vorrichtung (< 2 sec) genügt, um den Feststoffanteil in der Suspension zu trocknen und die Schadstoffe in die Gasphase zu überführen. Mittels der erfindungsgemäßen Vorrichtung ist es gelungen, einen kontinuierlichen Betrieb des Verfahrens ohne Einschränkungen sicherzustellen.

Gemäß einer vorteilhaften Ausgestaltung der Erfindung ist das erste rohrförmige Element gegenüber dem zweiten rohrförmigen Element wenigstens teilweise thermisch isoliert. Dadurch wird sichergestellt, daß der wesentliche Teil des Wärmeüberganges auf die zerstäubte Suspension erst während der eigentlichen Zerstäubung erfolgt.

Vorteilteilhaft ist es, die Vorrichtung derart auszubilden, daß das offene Austrittsende des ersten rohrförmigen Elementes und/oder das offene Austrittsende des zweiten rohrförmigen Elementes schlitzförmig ausgebildet ist bzw. sind. Es hat sich gezeigt, daß bei dieser Ausgestaltung eine optimale Zerstäubung des Sprühguts bzw. der Suspension erreicht wird, d.h. es ist dadurch der angestrebte Erhalt der gewünschten Sprühguteigenschaften möglich.

Ebenfalls vorteilhaft ist es, daß die thermische Isolierung durch einen das erste rohrförmige Element im Bereich des zweiten rohrförmigen Elementes wenigstens teilweise umgebenden Zwischenraumes bewirkt wird. Diese Ausgestaltung ermöglicht es, daß die Vorrichtung trotz kleinster Abmessungen einen hohen Isolierungsgrad des ersten rohrförmigen Elementes ermöglicht, durch den die Suspension zum Austrittsende des ersten Elementes gefördert wird.

Der Zwischenraum, d.h. der thermisch isolierende Raum, kann vorteilhafterweise durch einen geschlossenen Raum gebildet werden, was auf einfache Weise konstruktiv und bautechnisch realisiert werden kann, es kann aber auch vorteilhaft sein, den Zwischenraum zusätzlich noch zu evakuieren, so daß auf einfache Weise eine Verbesserung der thermischen Isolierung möglich ist. Bei einer anderen vorteilhaften Ausgestaltung der Erfindung wird die thermische Isolierung vorzugsweise dadurch realisiert, daß der Zwischenraum mit einem Isolationsmittel zur thermischen Isolierung wenigstens teilweise gefüllt ist.

Schließlich ist es vorteilhaft, daß vor dem offenen Eintrittsende des zweiten Elementes eine das gas- und/oder dampfförmige Wärmemittel erwärmende Einheit vorgesehen ist, wobei diese erwärmende bzw. Wärmeeinheit der sogenannten Überhitzerstrecke entsprechen kann, wie sie beispielsweise in der DE-PS 195 29 998 im dortigen Rohrreaktor enthalten ist, der ansonsten, wie schon ausgeführt, durch die erfindungsgemäße Vorrichtung wenigstens teilweise ersetzbar ist.

Die Erfindung wird nun unter Bezugnahme auf die nachfolgenden schematischen Zeichnungen anhand eines Ausführungsbeispieles eingehend beschrieben. Darin zeigen:
- Fig. 1: im Schnitt eine Vorrichtung, mit der eine Zerstäubung einer Suspension möglich ist, und
- Fig. 2: einen Ausschnitt aus dem Blockschaltbild des in der DE-PS 195 29 998 beschriebenen Vorrichtung zur Ausführung des Verfahrens zur Dekontaminierung von Schluff, Schadstoffe und Wasser enthaltenen Suspensionen, wobei die Vorrichtung gemäß Fig. 1 wenigstens teilweise die Verfahrensstrecke bzw. den Rohrreaktor der Verfahrensstrecke hinter dem dortigen Rührkessel ersetzen kann.

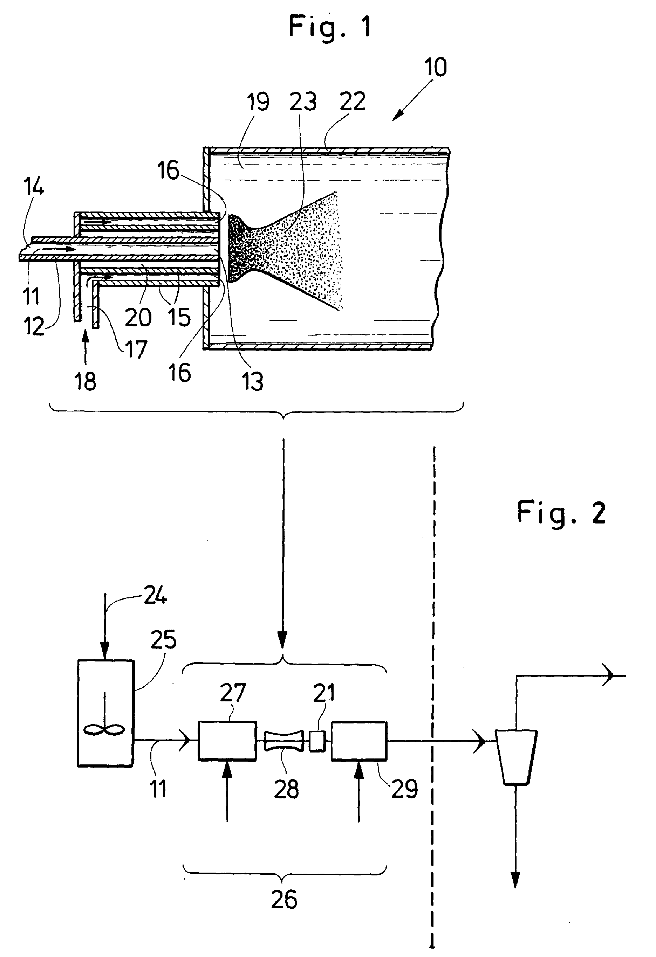

Es wird zunächst Bezug genommen auf Fig. 1, in der die Vorrichtung 10 dargestellt ist. Die Vorrichtung 10 umfaßt ein erstes rohrförmiges Element 12, durch das eine Suspension 11, beispielsweise unter Druck, gefördert wird, und zwar vom offenen Eintrittsende 14 zum offenen Austrittsende 13. Das rohrförmige Element 12 mündet in den Innen- bzw. Zerstäubungsraum 19 eines Gehäuses 22. Hier in der Darstellung von Fig. 1 im wesentlichen koaxial zum ersten rohrförmigen Element 12 ist ein zweites rohrförmiges Element 15 angeordnet, das mit seinem offenen Austrittsende 16 ebenfalls in den vom Gehäuse 22 umschlossenen Zerstäubungsraum 19 mündet, und in dessen offenes Eintrittsende 14 ein gas- und/oder dampfförmiges Wärmemittel 18 einbringbar ist. Ein Raum zwischen dem ersten rohrförmigen Element 12 und dem zweiten, hier koaxial dazu angeordneten zweiten rohrförmigen Element 15, ist mit Zwischenraum 20 bezeichnet, der, wie in Fig. 1 dargestellt ist, zum Zerstäubungsraum 19 des Gehäuses 22 hin geöffnet sein kann, der aber auch geschlossen sein kann. Im Falle der geschlossenen Ausbildung des Zwischenraums 20 kann dieser zur Verbesserung der thermischen Isolierung zwischen dem ersten rohrförmigen Element 12 und dem zweiten rohrförmigen Element 15 evakuiert sein oder mit einem thermisch isolierenden Mittel gefüllt sein.

Eine Suspension 11 wird beim Betrieb der Vorrichtung über das offene Eintrittsende 14 zugeführt. Die Suspension 11 tritt dann am offenen Austrittsende 13 aus. Gleichzeitig wird ein gas- und/oder dampfförmiges Wärmemittel 18 dem offenen Eintrittsende 14 des zweiten rohrförmigen Elementes 15 zugeführt. Dieses tritt am offenen Austrittsende 16 ebenfalls in den durch das Gehäuse 22 abgeschlossenen Zerstäubungsraum 19 aus. Das Wärmemittel 18 dient als Energieträger der Zerstäubung und Verdampfung der verdampfbaren Anteile der Suspension 11. Diese sind zeichnerisch in Fig. 1 durch den Suspensionsnebel 23 dargestellt. Durch die thermische Isolierung zwischen erstem rohrförmigen Element 12 und zweitem rohrförmigen Element 15 wird sichergestellt, daß der wesentliche Teil des Wärmeüberganges zwischen dem gas- und/oder dampfförmigen Wärmemittel 18 und der Suspension 11 erst während der Zerstäubung, d.h. nach Austritt aus den jeweiligen offenen Austrittsenden 13, 16, erfolgt.

In Fig. 2 ist ein Teil einer Vorrichtung zur Ausführung des Verfahrens gemäß der DE-PS 195 29 998 dargestellt. Mit dem bekannten Verfahren wird eine Dekontaminierung von Schluff, Schadstoffe und Wasser enthaltenen Suspensionen 11 bewirkt. Die Vorrichtung 10 gemäß Fig. 1 ist, wie aus der Verknüpfung von Fig. 1 und 2 ersichtlich, geeignet, eine Verfahrensstrecke, die bisher aus einem Rohrreaktor 26 bestand, wenigstens teilweise zu ersetzen. Der bisherige Rohrreaktor umfaßte, in Verfahrensrichtung nacheinander geschaltet, einen Injektor 27, eine Drossel 28, eine Wärmeeinheit/Überhitzerstrecke 21 und einen Injektor 29. Dem Rohrreaktor 26 vorgeschaltet ist ein Rührkessel 25, in dem das zu dekontaminierende Gemisch (Boden) 24, das beispielsweise mit Quecksilber kontaminiertes Erdreich sein kann, in Suspension 11 gehalten wird und bei einem Druck von 10 bis 20 bar durch Direktdampfzugabe auf eine Temperatur bis ca. 100° C vorgewärmt wird. Die Suspension 11 fließt bei dem bekannten Verfahren aufgrund ihrer Behandlung im Rührkessel 25 mit teilweise nicht newton'schem Fließverhalten dem Rohrreaktor 26 zu.

Bei dem bekannten Verfahren wird dann im Injektor 27 die Suspension 11 mit überhitztem Dampf beaufschlagt, wobei diese Zufuhr überhitzten Dampfes zur weiteren Aufheizung der Suspension 11 bis auf annähernd Siedetemperatur dient. Nachfolgend gelangt die Suspension 11 auf eine Drossel 28 und dieser nachfolgend auf eine Überhitzerstrecke/Wärmeeinheit 21 und schließlich dieser nachfolgend zu einem Dampfinjektor 29 und nachfolgend auf einen Feststoffabscheider. Bezüglich der weiteren Einzelheiten des bekannten Verfahrens wird auf die DE-PS 195 29 998 verwiesen.

Mittels der erfindungsgemäßen Vorrichtung 10 kann der Rohrreaktor 26, wie schon angedeutet, wenigstens teilweise, in bestimmten Anwendungsfällen auch vollständig ersetzt werden. Lediglich eine Wärmeeinheit/Überhitzerstrecke 21 ist bei der Vorrichtung 10 nötig, um ausreichend Wärme- und Druckenergie der Vorrichtung 10 zuzuführen, so daß der Zerstäubungsvorgang der Suspension 11, d.h. die Ausbildung des Suspensionsnebels 23, möglich ist. Mit der Vorrichtung 10 ist ein kontinuierlicher Betrieb möglich.

Mittels der Vorrichtung ist eine geringe Aufenthaltszeit der Suspension 11 (< 2 sec) möglich, um den Feststoffanteil in der Suspension 11 zu trocknen und die Schadstoffe in die Gasphase zu überführen.

### Bezugszeichenliste

- 10: Vorrichtung
- 11: Suspension
- 12: erstes rohrförmiges Element
- 13: offenes Austrittsende (Element 12)
- 14: offenes Eintrittsende (Element 12)
- 15: zweites rohrförmiges Element
- 16: offenes Austrittsende (Element 15)
- 17: offenes Eintrittsende (Element 15)
- 18: Wärmemittel
- 19: Zerstäubungsraum
- 20: Zwischenraum
- 21: Wärmeeinheit/Überhitzerstrecke
- 22: ' Gehäuse
- 23: Suspensionsnebel
- 24: Gemisch (Boden)
- 25: Rührkessel
- 26: Rohrreaktor
- 27: Injektor
- 28: Drossel
- 29: Injektor (Dampf)

## Patentansprüche

1. Vorrichtung zur Behandlung von Suspensionen, insbesondere zum Einsatz bei einem Verfahren zur Dekontaminierung von Schluff, Wasser und Schadstoffe, insbesondere Quecksilber und/oder Kohlenwasserstoffe enthaltenen Suspensionen, **dadurch gekennzeichnet, daß** zur Zerstäubung der Suspension (11) ein erstes rohrförmiges Element (12), durch das die Suspension (11) zum offenen Austrittsende (13) des ersten Elements (12) förderbar ist, vorgesehen ist, sowie ein zweites rohrförmiges Element (15), das das erste rohrförmige Element (12) im wesentlichen teilweise rohrförmig umgibt, wobei in das zweite Element (15) ein gas- und/oder dampfförmiges Wärmemittel (18) einbringbar ist, das zum offenen Austrittsende (16) des zweiten Elements (15) förderbar ist, und wobei beide Austrittsenden (13, 16) in einen Zerstäubungsraum (19) münden.

2. Vorrichtung nach Anspruch 1, **dadurch gekennzeichnet, daß** das erste rohrförmige Element (12) gegenüber dem zweiten rohrförmigen Element (15) wenigstens teilweise thermisch isoliert ist.

3. Vorrichtung nach einem oder beiden der Ansprüche 1 oder 2, **dadurch gekennzeichnet, daß** das offene Austrittsende (13) des ersten rohrförmigen Elementes (12) und/oder das offene Austrittsende (16) des zweiten rohrförmigen Elementes (15) schlitzförmig ausgebildet ist bzw. sind.

4. Vorrichtung nach einem oder beiden der Ansprüche 2 oder 3, **dadurch gekennzeichnet, daß** die thermische Isolierung durch einen das erste rohrförmige Element im Bereich des zweiten rohrförmigen Elementes (15) wenigstens teilweise umgebenden Zwischenraum (20) bewirkt wird.

5. Vorrichtung nach Anspruch 4, **dadurch gekennzeichnet, daß** der Zwischenraum (20) durch einen geschlossenen Raum gebildet wird.

6. Vorrichtung nach Anspruch 5, **dadurch gekennzeichnet, daß** der Zwischenraum (20) evakuiert ist.

7. Vorrichtung nach Anspruch 5, **dadurch gekennzeichnet, daß** der Zwischenraum (20) mit einem Isolationsmittel zur thermischen Isolierung wenigstens teilweise gefüllt ist.

8. Vorrichtung nach einem oder mehreren der Ansprüche 1 bis 7, **dadurch gekennzeichnet, daß** vor dem offenen Eintrittsende (17) des zweiten Elementes (15) eine das gas- und/oder dampfförmige Wärmemittel (18) erwärmende Einheit (21) vorgesehen ist. sd
